**Europäisches Patentamt**

**European Patent Office**

**Office européen des brevets**

(19)

(11) Veröffentlichungsnummer: **0 350 497**
**B1**

(12) **EUROPÄISCHE PATENTSCHRIFT**

(45) Veröffentlichungstag der Patentschrift: **07.11.90**

(21) Anmeldenummer: **88904402.0**

(22) Anmeldetag: **18.05.88**

(86) Internationale Anmeldenummer:
**PCT/EP88/00423**

(87) Internationale Veröffentlichungsnummer:
**WO 88/09451 01.12.88 Gazette 88/26**

(51) Int. Cl.⁵: **F 16 H 59/04**, F 16 H 63/44,
F 16 H 61/16

(54) SCHALTKONSOLE.

(30) Priorität: **27.05.87 DE 3717936**

(43) Veröffentlichungstag der Anmeldung:
**17.01.90 Patentblatt 90/03**

(45) Bekanntmachung des Hinweises auf die
Patenterteilung:
**07.11.90 Patentblatt 90/45**

(84) Benannte Vertragsstaaten:
**DE IT**

(56) Entgegenhaltungen:
**DE-A-1 951 428**
**US-A-2 582 895**

(73) Patentinhaber: **ZAHNRADFABRIK
FRIEDRICHSHAFEN AKTIENGESELLSCHAFT
Löwentaler Strasse 100 Postfach 2520
D-7990 Friedrichshafen 1 (DE)**

(72) Erfinder: **GLASER, Reiner
Flurstrasse 10a
D-7777 Salem 3 (DE)**

Courier Press, Leamington Spa, England.

## Beschreibung

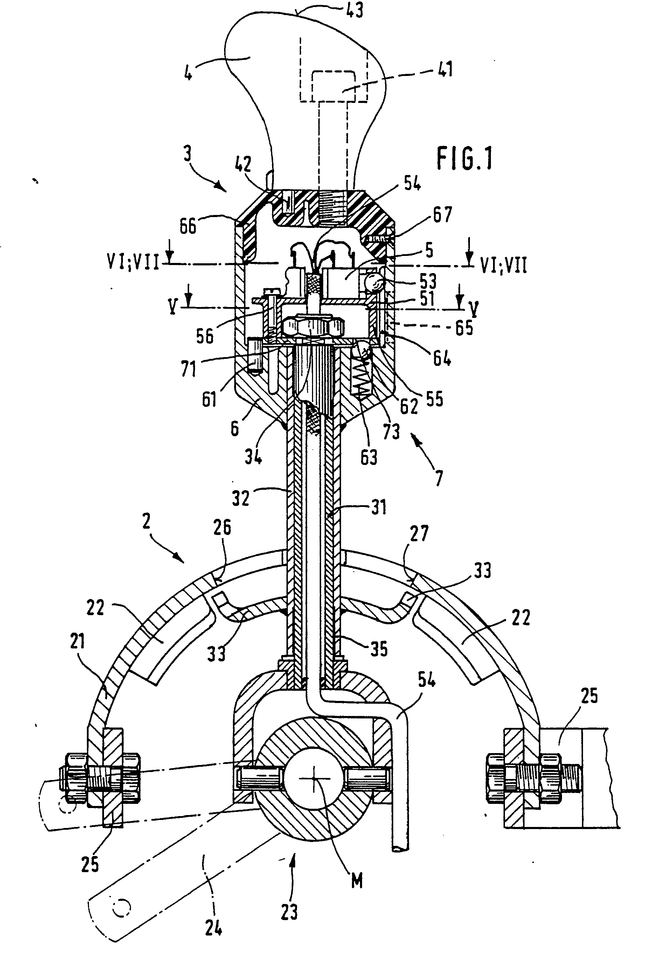

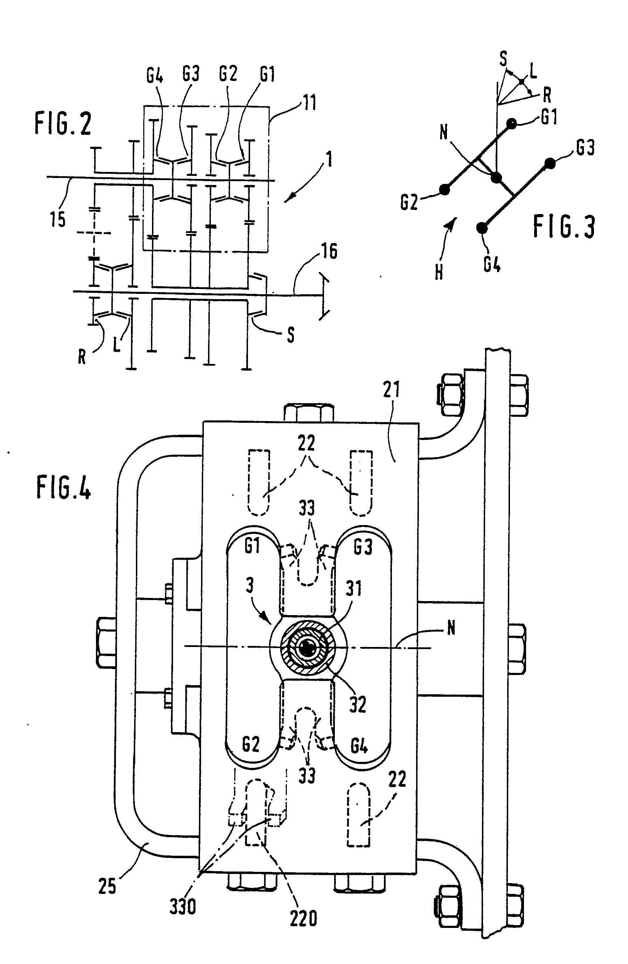

Die Erfindung betrifft eine Schaltkonsole mit mindestens einem Gangschalthebel zur Schaltung eines in Gruppenbauweise angeordneten Zahnräder-Wechselgetriebes nach dem Oberbegriff von Patentanspruch 1. Eine solche Schaltkonsole ist aus der EP—A—00 52 794 bekannt. Wie aus Fig. 3 dieser Schrift erkennbar, werden mit dem Handschalthebel 20 vier Gänge des Grundgetriebes vom Zahnräder-Wechselgetriebe nach dem H-Schaltbild von Hand mechanisch geschaltet. Weiter erfolgt über einen zweiten Schalthebel 40 die Umschaltung von zwei Vorwärts- und einer Rückwärtsgangsgruppe. Solche Einrichtungen, oder wie zu Fig. 1 und Fig. 2 dargestellt, mit einer lastschaltbaren Splittung der Gänge ins Schnelle bzw. Langsame haben sich bei Ackerschleppern bewährt. Die mechanische Zweihebel-Schaltung hat jedoch im Fahrerhaus einen hohen Platzbedarf und entspricht allgemein nicht mehr den Anforderungen, die bei modernen Ackerschleppern gestellt werden.

Es ist deshalb Aufgabe der Erfindung, eine Schaltkonsole nach dem Oberbegriff von Anspruch 1 weiterzuentwickeln, die weniger Platz benötigt, einfacher bedienbar ist und mit der die Gruppenumschaltung nur in der Neutrallage des Handschalthebels für das Grundgetriebe möglich ist.

Diese Aufgabe wird mit den kennzeichnenden Merkmalen von Patentanspruch 1 erfüllt.

Mit der Vereinigung der Schaltung für das Grundgetriebe nach dem H-Schaltbild und der Schaltung von drei Gruppen mit nur einem Schalthebel ergibt sich eine erhebliche Vereinfachung für den Fahrer, weil er in vielen Fahrsituationen nicht mehr von einem Schalthebel zum anderen Schalthebel umgreifen muß. Der Platzbedarf für die Schaltkonsole im Fahrerhaus ist ebenfalls geringer. Die Hilfskraftschaltung der Gruppen erleichtert darüber hinaus noch die Schaltung eines solchen Getriebes mit zwei Vorwärts- und einer Rückwärtsgangsgruppe, wobei die mechanische Verriegelung des Schaltknaufes bei einem geschalteten Gang im Grundgetriebe besonders wenig Aufwand und keine Änderungen bzw. Eingriffe im Getriebe erfordert, wie die Anordnung der Sperrklinken am Außenrohr des Schalthebels und der Führungsstege am Kulissenblech beweisen. Besonders platzsparend ist dabei die Anordnung von nur zwei Sperrklinken zum Sperren von drei Stellungen in einer Schaltrichtung von zwei Gassen. Die zum Innen- und Außenrohr des Schalthebels achsparallel angeordnete Rastierung mit der in der gleichen Ebene angeordneten Schwenkbegrenzung benötigt bei guter Funktion wenig Raum und ist einfach herstell- und montierbar.

Die aus einem im Gehäuse angeordneten Zylindersteift und einem Ausschnitt in der Rastenscheibe bestehende Begrenzung der Drehbewegung ermöglicht in Verbindung mit den Sperrklinken und Führungsstegen eine einfach angeordnete Sperrung der Gruppenumschaltung, während ein Gang im Grundgetriebe eingelegt ist. In den beiden äußeren Stellungen des Schaltknaufes muß nur die Verdrehung nach der Mittelstellung zu von jeweils einer Sperrklinke gesperrt werden. Die Verdrehung nach außen ist ja generell über die Begrenzung der Drehbewegung gesperrt. Die Mittelstellung des Schaltknaufes wird über beide Sperrklinken gesperrt, weil zwischen ihnen der am Kulissenblech angeordnete Führungssteg liegt und eine Verdrehung des Schaltknaufes über beide Sperrklinken, das außenrohr und das Gehäuse verhindert wird. Die Schaltung von drei Gruppen über nur zwei Mikroschalter in Verbindung mit nur zwei Nockenbahnen ist möglich, weil die mit der Mittelstellung des Schaltknaufes verbundene Gruppe durch die Nichtbetätigung von beiden Mikroschaltern geschaltet wird. In jeder aus der Mittelstellung herausgedrehten Stellung des Schaltknaufes schaltet dann ein Mikroschalter in Verbindung mit einer Nockenbahn die jeweilig andere Gruppe.

Besonders vorteilhaft ist auch, daß das Innenrohr mit der Rastenscheibe und der Trägerplatte und damit auch der Mikroschalter nicht verdreht werden, so daß die Leitungen zu den Mikroschaltern im Innenrohr gleichfalls ruhig stehen, wobei die Schwenkbewegung des Innerrohrs keine Belastung für die Leitungen darstellt.

Infolge der Anordnung eines Gehäuses und eines Deckels zwischen Schaltknauf und Außenrohr und der festen Verbindung zwischen Innenrohr, Rastenblech, Trägerplatte und Mikroschaltern ist bei abgenommenem Schaltknauf und Deckel die Funktion der Gruppenumschaltung noch voll erhalten, weil die Drehbewegungen über das Gehäuse ausgeführt werden können.

Mit einer Öffnung bzw. einem Fenster im Gehäuse und der Anbringung von Markierungen am Schaft der Trägerplatte kann die jeweilige Stellung der Gruppe in einfacher Weise angezeigt werden.

Die gekrümmte Gestaltung des Kulissenbleches mit einem definierten Radius um das Gelenk, an dem das innere Rohr des Schaltbehels befestigt ist, ermöglicht eine günstige konstruktive Lösung, insbesondere von der Blockiereinrichtung.

Aus den Schriften DE—C—19 46 496 und DE—C—20 40 195 ist zwar bekannt, eine Gruppenschaltung über Hilfskraft zu bewirken. Es werden aber nur zwei Gruppen über ein Vorsteuerventil, das am Gangsschalthebel angeordnet ist, geschalten und die Verriegelung der Gruppenumschaltung, während ein Gang im Grundgetriebe eingelegt ist, erfolgt über eine Einrichtung an einer Drehwelle in Verbindung mit einem Hauptabschaltventil für das Medium der Hilfskraft.

Weitere Einzelheiten der Erfindung werden anhand von Zeichnungen und einem Ausführungsbeispiel erläutert. Es zeigen:

Fig. 1 eine Schaltkonsole mit einem Schalthebel in Seitenansicht und im Schnitt;

Fig. 2 eine schematische Darstellung des Zahnräder-Wechselgetriebes;

Fig. 3 das Schaltbild für die vier Gänge des Grundgetriebes und die drei Gruppen;

Fig. 4 die Schaltkonsole in Draufsicht mit Schalthebel geschnitten;

Fig. 5 einen Schnitt V—V aus Fig. 1;

Fig. 6 einen Schnitt VI/VII—VI/VII in Mittelstellung des Schaltknaufes aus Fig. 1;

Fig. 7 einen Schnitt VI/VII—VI/VII in einer verdrehten Stellung des Schaltknaufes aus Fig. 1;

Fig. 8 elektrische Funktion Mikroschalter-Magnetventile.

Fig. 9 eine Tabelle über die Betätigung des Mikroschalters nach Fig. 8.

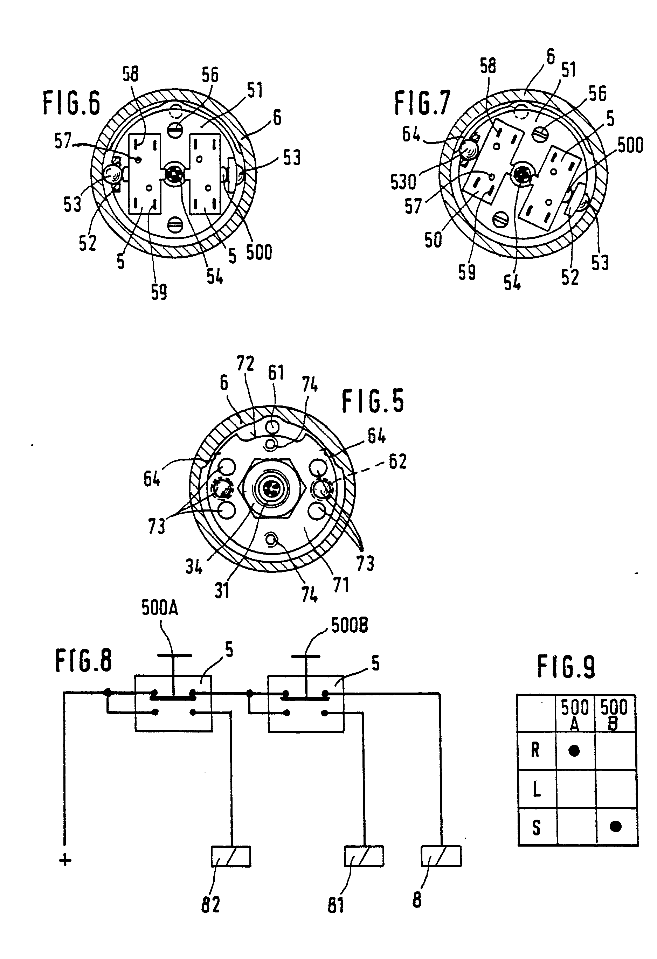

Die Schaltkonsole 2 mit dem Schalthebel 3 nach Fig. 1 ist im Bereich des Fahrers über eine Befestigungseinrichtung 25 am nicht dargestellten Fahrerhaus angeordnet. Das Kulissenblech 21 ist in einem definierten Radius um den Mittelpunkt M des Gelenkes 23 angeordnet, so daß die Sperrklinken 33 am Schalthebel 3 bei einer Schwenkbewegung etwa den gleichen Abstand zum Kulissenblech haben. An diesem sind für diese Sperrklinken 33 noch Führungsstege 22 angeordnet. Der Schalthebel 3 setzt sich aus einem mit dem Gestängehebel 24 im Gelenk 23 fest verbundenen Innenrohr 31 und einem über Lagerbüchsen 35 auf diesem drehbar angeordneten Außenrohr 32 sowie aus dem mit diesem fest verbundenen Gehäuse 6, Deckel 66 und Schaltknauf 4 zusammen. Mit dem Innenrohr ist über eine Mutter 34 eine Rastenscheibe 71 einer Rasteinrichtung 7 fest verbunden. Die Rastenscheibe hat noch Löcher 73, in die Kugeln 62 eingreifen und eine Rastierung ermöglichen. Diese sind im Gehäuse 6 gelagert und werden von jeweils einer Druckfeder 63 gegen die kleineren Löcher 73 der Rastenscheibe 71 gedrückt. Im Gehäuse ist noch ein Zylinderstift 61 angeordnet, der in Verbindung mit einem Ausschnitt die Verdrehung des Schaltknaufes 4 von einer Mittelstellung aus nach beiden Seiten begrenzt. Über Schrauben 56 ist noch eine Trägerplatte 51 zur Aufnahme von zwei Mikroschaltern 5 befestigt, die bei einer Drehbewegung des Schaltknaufes 4 über Nockenbahnen 64 und Kugeln 53 beim Schwenken des Schaltknaufes geschaltet werden. Anstelle von elektromechanischen Schaltern können auch elektronische Schaltelemente eingesetzt werden, z.B. Hall sensoren, wobei anstelle der Nockenbahnen 64 Permanentmagnete ins Gehäuse eingesetzt werden. Die Leitungen 54 von den Mikroschaltern 5 werden über das Innenrohr 31 aus der Schaltkonsole herausgeführt und zu den in Fig. 8 dargestellten Magnetventilen 8, 81, 82 geleitet. Die Befestigung des Deckels 66 erfolgt lösbar über am Umfang verteilte Schrauben 67 und der Schaltknauf 4 ist über eine Drehsicherung 42 und Befestigungsschraube 41 mit diesem Deckel verbunden.

Die Funktion ist bei abgenommenem Deckel 66 voll gewährleistet und kann durch Drehen am Gehäuse 6 überprüft werden.

In der schematischen Darstellung des Getriebes 1 nach Fig. 2 sind im Bereich des Grundgetriebes 11 die Schaltkupplungen der Gänge G1 bis G4, die in bekannter Weise über den Handschalthebel 3 geschaltet werden, erkennbar. Mit R, L und S sind die über Hilfskraft betätigten Schaltkupplungen für die Gruppenschaltung bezeichnet, 15 und 16 sind die Antriebs- und Antriebswellen.

Die Fig. 3 zeigt das H-Schaltbild mit den Gassen der Gänge G1/G2 und G3/G4, die auch im Kulissenblech 21 eingearbeitet sind. Aus der Neutralstellung heraus ist es noch möglich, durch Verdrehen des Schaltknaufes drei Gruppen des Getriebes zu schalten, z.B. mit der Mittelstallung eine langsamere Gruppe L und den beiden äußeren verdrehten Stellungen eine schnelle Gruppe S und eine Rückwärtsgangsgruppe R. Dieses kombinierte Schaltbild kann auch auf der Oberseite des Schaltknaufes 43 nach Fig. 1 zur besseren Information des Fahrers eingearbeitet sein. Darüber hinaus ist noch am Gehäuse 6 nach Fig. 1 ein Fenster 65 angeordnet, in dem beim Verdrehen des Schaltknaufes die an dem Schaft 55 der Trägerplatte 51 angeordneten Symbole der Gruppenschaltung L, S, R sichtbar werden.

In der Draufsicht der Schaltkonsole 2 nach Fig. 4 befindet sich der Handschalthebel 3—Innenrohr 31, Außenrohr 32—in Neutralstellung. Im Kulissenblech 21 ist die Schaltkulisse H mit den Gassen der Gänge G1/G2, G3/G4 erkennbar. Die den Gängen zugeordneten Führungsstege sind mit 22 bezeichnet, am Außenrohr sind die Sperrklinken 33 befestigt.

Die Fig. 5 zeigt das Gehäse 6 mit den Nockenbahnen 64 sowie dem im Gehäuse angeordneten Zylinderstift 61 sowie die Rastenscheibe 71 mit den Löchern 73, die über die Mutter 34 mit dem Innenrohr 31 fest verbunden ist. Der Ausschnitt 72 der Rastenscheibe 71 wirkt mit dem zylinderischen Stift 61 zusammen und begrenzt die Drehbewegung des Gehäuses 6, wobei das Gehäuse in der mittleren Stellung dargestellt ist. Mit 74 sind die Gewindelöcher bezeichnet, in denen die Trägerplatte 51 über die Schrauben 56 befestigt wird.

Die Fig. 6 und 7 zeigen je einen Schnitt durch das Gehäuse 6, so daß die Mikroschalter 5 in Draufsicht erkennbar sind, wobei diese auf der Trägerplatte, z.B. über Nieten 57, befestigt wurden. Die Trägerplatte selbst ist mit den Schrauben 56 an der Rastenscheibe 71 gehalten. Jeder Mikroschalter, der als doppelt unterbrechender Wechsler ausgeführt ist, hat vier Lötfahnen, 58, 59 zum Anschluß der elektrischen Leitungen 54. In Fig. 6 ist das Gehäuse in der Mittelstellung dargestellt, wobei die Kugeln 53 nicht eingedrückt sind, so daß beide Mikroschalter 5 sich in der nicht geschalteten Stellung befinden, in der die Anschlüsse—Lötfahne 58—überbrückt und die Anschlüsse—Lötfahne 59—unterbrochen sind. Die Fig. 7 zeigt eine Stellung des Gehäuses 6, das über den nicht dargestellten Schaltknauf 4 verdreht wurde. In dieser Stellung hat die Nockenbahn 64 vom Gehäuse 6 über die Kugel 530 den Mikroschalter 50 betätigt, so daß nunmehr die Anschlüsse—Lötfahnen 59—überbrückt sind. Die Kugeln 53, 530 werden über die Lager 52, die an die Trägerplatte 51 angeformt sind, im Bereich vom Drücker 500 des Mikroschalters 5 gehalten. In dem elektrischen Funktionsschaltbild nach Fig. 8 sind mit 5 die Mikroschalter und mit 8, 81, 82 die den Gruppen zugeordneten Magnetventile dargestellt. Aus Tabelle 9 ist erkennbar, welcher Drükker 500A, 500B den Gruppen R, L, S zugeordnet eingedrückt ist.

Die Schaltkonsole 2 in Verbindung mit dem Schalthebel 3 wirkt wie folgt: In der in Fig. 1 gezeichneten Stellung des Schalthebels in Neutral N sind die Sperrklinken 33 nicht behindert, so daß der Knauf 4 mit dem Gehäuse 6 und dem Außenrohr 32 aus der Mittelstellung heraus sowohl nach links wie auch nach rechts verdreht werden können. Der Verdrehwinkel wird dabei über die Kugeln 62 und die meist doppelt angeordneten Löcher 73 gerastet und vom Ausschnitt 72—Fig. 5—in Verbindung mit dem Zylinderstift 61 begrenzt. Ist ein Gang eingelegt, also der Schalthebel 3 verschwenkt, bis das Außenrohr 32 an einem der Anschläge 26 oder 27 vom Kulissenblech 21 anliegt, kann der Schalthebel nicht mehr verdreht werden, weil die Sperrklinken 33 über die Führungsstege 22 an einer Verdrehung gehindert werden. In der Mittelstellung des Schaltknaufes—langsame Gruppe L ist eingelegt—wird bei einem eingelegten Gang G1 bis G4 jeweils über beide Sperrklinken 330 in Verbindung mit dem jeweiligen Führungssteg 220 eine Verdrehung des Schalthebels 3 und damit eine Gruppenumschaltung verhindert. Ist der Schalthebel 3 in der Neutrallage N, in der als kein Gang des Grundgetriebes G1 bis G4 eingelegt ist, nach links oder rechts verdreht worden, so sperrt nach dem Einlegen des Ganges jeweils nur eine Schaltklinke 33 in Verbindung mit einem Führungssteg die zur Mitte zu führende Drehrichtung, während die nach außen gerichtete Sperre über den zylindrischen Stift 61 im Gehäuse 6 in Verbindung mit dem Ausschnitt 72 der Rastenscheibe erfolgt. Aus Fig. 8 und 9 ist leicht erkennbar, daß über die nicht geschalteten Mikroschalter 5 in der Mittelstellung des Schaltknaufes 4 das Magnetventil der langsamen Gruppe 8 beaufschlagt ist, während in der jeweils geschwenkten Stellung entweder über den eingedrückten Drücker 500A das Magnetventil der Rückwärtsgangsgruppe 82 oder über den Drücker 500B das Magnetventil der schnellen Gruppe 81 mit Strom versorgt wird.

Bezugszeichen

| 1 | Zahnräder-Wechselgetriebe |
|---|---|
| 11 | Grundgetriebe |
| 15 | Antriebswelle |
| 16 | Abtriebswelle |
| G1—G4 | Schaltkupplungen für Gänge im Grundgetriebe |
| R | Schaltkupplung für Rückwärtsganggruppe |
| S | Schaltkupplung für schnelle Gruppe |
| L | Schaltkupplung für langsame Gruppe |
| N | Neutralstellung |
| 2 | Schaltkonsole |
| 21 | Kulissenblech |
| 22, 220 | Führungssteg |
| 23 | Gelenk |
| 24 | Gestängehebel |
| 25 | Befestigungseinrichtung |
| 26 | Anschlag |
| 27 | Anschlag |
| H | H-Schaltbild |
| M | Mittelpunkt |
| 3 | Schalthebel |
| 31 | Innenrohr |
| 32 | Außenrohr |
| 33, 330 | Sperrklinken |
| 34 | Mutter |
| 35 | Lagerbüchsen |
| 4 | Schaltknauf |
| 41 | Befestigungsschraube |
| 42 | Drehsicherung |
| 43 | Oberseite |
| 5, 50 | Elektrische Schaltelemente/ Mikroschalter |
| 51 | Trägerplatte |
| 52 | Lager |
| 53, 530 | Kugel |
| 54 | elektrische Leitung |
| 55 | Schaft |
| 56 | Schraube |
| 57 | Nieten |
| 58 | Anschlüsse/Lötfahnen |
| 59 | Anschlüsse/Lötfahnen |
| 500 | Drücker |
| 6 | Gehäuse |
| 61 | Zylinderstift |
| 62 | Kugel |
| 63 | Druckfeder |
| 64 | Nockenbahn |
| 65 | Fenster |
| 66 | Deckel |
| 67 | Schrauben |
| 7 | Rasteinrichtung |
| 71 | Rastenscheibe |
| 72 | Ausschnitt |
| 73 | Löcher |
| 74 | Gewindelöcher |
| 8 | Magnetventil langsame Gruppe |
| 81 | Magnetventil schnelle Gruppe |
| 82 | Magnetventil Rückwärtsganggruppe |

**Patentansprüche**

1. Schaltkonsole (2) mit mindestens einem Gangsschalthebel (3) zur Schaltung eines in Gruppenbauweise angeordneten Zahnräder-Wechselgetriebes (1), vorrangig für einen Ackerschlepper, wobei die im Grundgetriebe (11) gebildeten Gänge (G1 bis G4) in einem H-Schaltbild (H) von Hand und mechanisch geschaltet werden und eine zusätzliche Umschaltung von zwei Vorwärts- (L, S) und einer Rückwärtsganggruppe (R) erfolgt, dadurch gekennzeichnet, daß der Gangschalthebel (3) einen in drei Schaltstellungen verdrehbaren Schaltknauf (4) trägt und über elektrische Schaltelemente (5) die drei Gruppen (L, S, R) des Zahnräder-Wechselgetriebes (1) über Hilfskraft geschaltet werden und daß bei einem im Grundgetriebe (11) geschalteten Gang der Schaltknauf (4) verriegelt ist.

2. Schaltkonsole (2) nach Anspruch 1, dadurch gekennzeichnet, daß der Gangschalthebel (3) aus einem in die vier Gangsstellungen (G1 bis G4) verschwenkbaren, aber sonst feststehenden Innenrohr (31) und einen mit dem Schaltknauf (4) verbundenen und mit diesem verdrehbaren und mit dem Innenrohr verschwenkbaren Außenrohr (32) besteht, an dem Sperrklinken (33) angeordnet sind, die in den geschalteten Stellungen des Grundgetriebes (11) mit am Kulissenblech (21) angeordneten Führungsstegen (22) zusammenwirken.

3. Schaltkonsole (2) nach Anspruch 2, dadurch gekennzeichnet, daß zwischen dem Innen- (31) und dem Außenrohr (32) eine Rasteinrichtung (7) angeordnet ist, die aus einer mit dem Innenrohr (31) koaxial angeordneten und fest verbundenen Rastenscheibe (71) und aus mindestens einer Kugel (62) und Druckfeder (63) besteht, die in einem mit dem Außenrohr (32) fest verbundenen Gehäuse (6) gelagert sind, wobei die Drehung des Schaltknaufes (4) an den beiden von der Mittelstellung nach links und rechts abweichenden Positionen (R, S) über einen im Gehäuse (6) angeordneten Zylinderstift (61) und einem in der Rastenscheibe (71) angeordneten Ausschnitt (72) begrenzt wird.

4. Schaltkonsole (2) nach Anspruch 3, dadurch gekennzeichnet, daß in jeder Schaltrichtung (G1+G3; G2+G4) je zwei Sperrklinken (33) und Führungsstege (220) angeordnet sind, wobei in der Mittelstellung des Schaltknaufes (4) die Sperrklinken (330) beidseitig an einem einer Schaltrichtung und Schaltgasse zugeordneten Führungssteg (220) entlanggeschwenkt werden, wenn ein Gang eingelegt wird, so daß der Schaltknauf (4) aus der Mittelstellung nicht herausgedreht werden kann und in den beiden verdrehten Stellungen (R, S) jeweils eine Sperrklinke (33) an einem Führungssteg (22) entlanggeschwenkt wird und eine Verdrehung in die Mittelstellung verhindert wird, während die zweite Verdrehrichtung über die Begrenzung des Drehbereiches durch den Zylinderstift (61) und Ausschnitt (72) erfolgt, so daß eine Gruppenumschaltung, die durch Drehen des Schaltknaufes (4) bewirkt wird, nur in der Neutralstellung (N) des Handschalthebels (3) möglich ist.

5. Schaltkonsole (2) nach Anspruch 4, dadurch gekennzeichnet, daß an der Rastenscheibe (71) die Trägerplatte (51) befestigt ist, auf der zwei Mikroschalter (5) und in zwei Lagern (52) Kugeln (53) angeordnet sind, wobei die Betätigung der Mikroschalter (5) über diese Kugeln (53) und am Gehäuse (6) angeformte Nockenbahnen (64) erfolgt und die Leitungen (54) über das Innenrohr (31) geführt werden.

6. Schaltkonsole (2) nach Anspruch 5, dadurch gekennzeichnet, daß in der Mittelstellung über beide Mikroschalter (5) ein Magnetventil (8) einer Gruppe, z.B. der langsamen Gruppe (L), und in jeder Endstellung der Verdrehung am Gehäuse (6) über nach innen angeformte Nockenbahnen (64) je ein Magnetventil (81, 82) für die beiden anderen Gruppen von jeweils einem Mikroschalter (5) betätigt wird.

7. Schaltkonsole (2) nach Anspruch 6, dadurch gekennzeichnet, daß am Schaft (55) der Trägerplatte (51) den drei Schaltstellungen der Gruppenschaltung zugeordnete Symbole (R, L, S) angeordnet sind die über ein Fenster (65) im Gehäuse (6), entsprechend der Verdrehung des Gehäuses (6) über den Schaltknauf (4) zugeordnet sichtbar werden.

8. Schaltkonsole (2) nach Anspruch 7, dadurch gekennzeichnet, daß zwischen dem Schaltknauf (4) und dem Gehäuse (6) noch ein Deckel (66) angeordnet ist, der mit dem Schaltknauf (4) verbunden und am Gehäuse (6) über vorrangig am Umfang verteilte Schrauben (67) befestigt ist und ohne Funktionsbeeinträchtigung zu Prüf- und Einstellarbeiten abgenommen werden kann.

9. Schaltkonsole (2) nach Anspruch 8, dadurch gekennzeichnet, daß nur das Innenrohr (31) über das Gelenk (23) zur Übertragung der Schwenkbewegung mit den Gestängehebeln (24) in Wirkverbindung steht und das Außenrohr (32) über Lagerbuchsen (35) auf dem Innenrohr (31) gelagert ist.

10. Schaltkonsole (2) nach Anspruch 9, dadurch gekennzeichnet, daß das Kulissenblech (21) um den Mittelpunkt (M) des Gelenkes (23) gekrümmt angeordnet ist.

**Revendications**

1. Console de commande (2) avec au minimum un levier (3) de changement de vitesse pour enclencher une boîte de vitesses à pignons dentés (1) disposée en groupe, en premier lieu pour un tracteur agricole, les rapports (G1 à G4) de la boîte principale (11) pouvant être passés manuellement et mécaniquement selon une grille en H (H), avec une commutation complémentaire de deux groupes avant (L, S) et d'un groupe AR (R), caractérisée par le fait que le levier (3) comporte un pommeau (4) tournant sur trois positions, les trois groupes (L, S, R) de la boîte à pignons dentés (1) étant enclenchés par l'intermédiaire d'éléments électriques (5) et un force auxiliaire, à quoi s'ajoute que le pommeau (4) est verrouillé lorsque l'un des rapports de la boîte principale (11) est passé.

2. Console de commande (2) selon revendication 1, caractérisée par le fait que le levier (3) est constitué d'un tube intérieur (31) orientable sur les quatre positions (G1 à G4), mais pour le reste fixe et d'un tube extérieur (32) relié au pommeau (4), pouvant tourner avec celui-ci et orientable avec le tube intérieur, sur lequel tube extérieur sont disposés des cliquets de verrouillage (33), qui, sur les positions enclenchées de la boîte principale (11) agissent conjointement sur les profilés de guidage (22) disposés sur la tôle (21) de la coulisse.

3. Console de commande (2) selon revendication 2, caractérisée par le fait qu'entre le tube intérieur (31) et le tube extérieur (32) est placé un dispositif d'encliquetage (7) formé d'un disque d'encliquetage (71) coaxial au tube intérieur (31) et relié rigidement et d'au moins une bille (62) et d'un ressort de pression (63), qui sont logés dans un carter (6) solidaire du tube externe (32), la rotation du pommeau (4) étant limitée au niveau des positions (R, S) s'écartant à gauche et à droite de la position centrale par l'intermédiaire d'une goupille cylindrique (61) placée dans le carter (6) et d'une découpure (72) ménagée dans le disque d'encliquetage (71).

4. Console de commande (2) selon revendication 3, caractérisée par le fait que dans chaque sens d'actionnement (G1+G3; G2+G4) sont disposés deux cliquets de verrouillage (33) et profilés de guidage (220), les cliquets de verrouillage (330) pouvant, en position centrale du pommeau (4), être orientés des deux côtés et le long d'un profilé de guidage (220) affecté à un sens et un couloir d'actionnement, lorsqu'un rapport est enclenché, de sorte que le pommeau (4) ne puisse être sortie de la position centrale et que resp. un cliquet de verrouillage (33) puisse être orienté le long d'un profilé de guidage (22) dans les deux positions (R, S), d'où l'impossibilité de passer sur la position centrale, alors que la deuxième position de rotation est générée par la limitation de la plage de rotation via la goupille cylindrique (61) et la découpe (72), la commutation d'un groupe engendrée par la rotation du pommeau (4) n'étant donc possible que si le levier d'actionnement manuel (3) est sur la position neutre (N).

5. Console de commande (2) selon revendication 4, caractérisée par le fait que le disque d'encliquetage (71) est fixé au plateau (51) sur lequel sont disposé deux microrupteurs (5) et les billes (53) dans les deux logements (52), l'actionnement des microrupteurs (5) étant assuré par l'intermédiaire de ces billes (53) et de voies de cames (64) taillées dans le carter (6), les conducteurs (54) passant dans le tube interne (31).

6. Console de commande (2) selon revendication 5, caractérisée par le fait qu'en position centrale, par l'intermédiaire des deux microrupteurs (5), une électrovanne (8) d'un groupe, par exemple du groupe lent (L), et dans chaque position finale de la rotation au niveau du carter (6) via des voies de cames (64), taillée vers l'intérieur, est actionnée resp. une électrovanne (81, 82) pour les deux autres groupes par resp. un microrupteur (5).

7. Console de commande (2) selon revendication 6, caractérisée par le fait que sur la tige (55) du plateau (51) sont disposés les symboles (R, L, S) correspondant aux trois positions de chaque groupe, lesqueles deviennent visibles dans une fenêtre (65) ménagée dans le carter (6), conformément à la rotation du carter (6) via le pommeau (4).

8. Console de commande (2) selon revendication 7, caractérisée par le fait qu'un couvercle (66) est également placé entre le pommeau (4) et le carter (6), lequel couvercle est relié au pommeau (4) et fixé au carter (6) via des vis (67) essentiellement reparties par le pourtour, celui-ci pouvant être enlevé à des fins de contrôle et de réglage sans que cela porte préjudice au fonctionnement.

9. Console de commande (2) selon revendication 8, caractérisée par le fait que seul le tube interne (31) agit conjointement aux leviers de tringlerie (23) par l'intermédiaire de l'articulation (24) de transmission du mouvement d'orientation et que le tube externe (32) est logé sur le tube interne (31) par l'intermédiaire des coussients (35).

10. Console de commande (2) selon revendication 9, caractérisé par le fait que la tôle de coulisse (21) est repliée autour du point central (M) de l'articulation (23).

**Claims**

1. Shift console (2) with at least one shift lever (3) for changing gear in a variable speed transmission (1) arranged in range design, conceived principally for a farm tractor wherein the gears (G1 to G4) in the basic gearbox (11) can be selected manually with an H gate pattern (H) and engaged mechanically with an additional selector unit for two forwards (Lo and Hi) and one reverse gear range (R) characterized in that the shift lever (3) is fitted with a shift grip (4) which can be rotated into 3 shift settings, engaging the three groups (Lo, Hi, Reverse) of the variable speed transmission (1) the electrical shift elements (5) and servo systems, and having a detent mechanism which locks the shift grip (4) when a gear is engaged in the basic gearbox (11).

2. Shift console (2) as claimed in Claim 1, characterised in that the shift lever (3) consists of an inner pipe (31) which can be swivelled into one of the four gear positions (G1 to G4) but which is otherwise stationary and an outer pipe (32) which is connected to the shift grip (4) with which it can be rotated and swivelled together with the inner pipe and upon which pawl detents (33) are arranged which act together with the guide members (22) arranged on the gate plate (21) in each engaged position of the basic gearbox (11).

3. Shift console (2) as claimed in Claim 2, characterised in that, a detent fixture (7) is arranged between inner pipe (31) and outer pipe (32) which consists of a detent disc (71) coaxially arranged upon and firmly connected to the inner pipe (31) as well as one ball (62) and a pressure spring (63) which are located in a housing (6) firmly attached to the outer pipe (32) which have the effect of limiting turning motion of the shift group (4) to its settings left and right of centre (Reverse and Hi) by means of a cylindrical pin (61) arranged in the housing and an aperture (72) arranged in the detent disc (71).

4. Shift console (2) as claimed in Claim 3, characterised in that, two pawl detents (33) and guide members (220) are arranged in each direction of engagement travel (G1+G3; G2+G4) whereby, when the shift group (4) is in its central position, the pawl detents (330) are moved along both sides of a guide member (220) allocated to one direction of engagement travel and one gate, this occurring whenever a gear is engaged such as it is not possible to turn the shift group (4) out of its central position and, when it is in one of its twisted settings (Reverse, Hi), one pawl detent (33) is swivelled along a guide member (22) to prevent it turning back into central position and whereby the second direction of rotation has its degree of rotation limited by the cylindrical pin (61) and aperture (72) such that a range-change initiated by rotating the shift group (4) can only be performed with the shift lever (3) in neutral (N).

5. Shift console (2) as claimed in Claim 4, characterised in that the detent disc (71) is attached to the support plate (51) upon which two microswitches (5) and balls (53) are arranged in two bearings (52) and in that these microswitches (5) are actuated by the balls (53) and cam races (64) machined into the housing (6) with leads (54) guided through the inner pipe (31).

6. Shift console (2) as claimed in Claim 5, characterised in that, in central position one solenoid valve (8) of a range, e.g. the low range (Lo) is actuated by both microswitches (5) and, in each limit position as the housing (6) is rotated, one solenoid valve (81, 82) for each of the other two ranges is actuated by only one microswitch (5) via the internally arranged cam races (64).

7. Shift console (2) as claimed in Claim 6, characterised in that, symbols (Reverse, Lo, Hi) representing the three shift positions of the range-change are arranged on the shaft (55) of the support plate (51) which become visible through an aperture (65) in the housing (6) depending on how the shift group (4) is rotated relative to the housing (6).

8. Shift console (2) as claimed in Claim 7, characterised in that, another cover (66) is arranged between the shift group (4) and the housing (6) which is connected to the shift group (4) and is secured to the housing (6) by bolts (67), most distributed around the circumference, which can be removed for inspection and adjustment work without adversely effecting the function of the unit.

9. Shift console (2) as claimed in Claim 8, characterised in that, only the inner pipe (31) is actively connected via a joint (23) to transmit swivel motion with the linkage levers (24) and the outer pipe (32) is mounted on the inner pipe (31) in bearing bushes (35)

10. Shift console (2) as claimed in Claim 9, characterised in that the gate plate (21) is bent around the centre point (M) of joint (23).

FIG.1

FIG.2

FIG.3

FIG.4

FIG.6

FIG.7

FIG.5

FIG.8

FIG.9

| | 500<br>A | 500<br>B |
|---|---|---|
| R | ● | |
| L | | |
| S | | ● |